(19) Europäisches Patentamt
European Patent Office
Office européen des brevets

(11) EP 2 481 841 B1

(12) **EUROPEAN PATENT SPECIFICATION**

(45) Date of publication and mention
of the grant of the patent:
**16.04.2014 Bulletin 2014/16**

(51) Int Cl.:
*D04H 1/42* *(2012.01)*    *D04H 1/74* *(2006.01)*
*D04H 1/435* *(2012.01)*    *D04H 1/498* *(2012.01)*
*D04H 1/4342* *(2012.01)*    *B32B 27/12* *(2006.01)*
*A41D 31/00* *(2006.01)*    *B32B 5/26* *(2006.01)*
*D04H 1/49* *(2012.01)*    *D04H 1/4258* *(2012.01)*

(21) Application number: **12164078.3**

(22) Date of filing: **16.10.2009**

(54) **An arc flash protection, multiple-use nonwoven fabric structure**

ARC-Blitzschutz, Mehrweg-Fliesgewebestruktur

Protection contre les éclairs d'arc et structure d'étoffe non tissée à usages multiples

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **17.10.2008 EP 08166905**
**17.10.2008 US 106174 P**

(43) Date of publication of application:
**01.08.2012 Bulletin 2012/31**

(62) Document number(s) of the earlier application(s) in accordance with Art. 76 EPC:
**09737407.8 / 2 347 047**

(73) Proprietor: **Norafin Industries (Germany) GmbH**
**09456 Mildenau (DE)**

(72) Inventors:
• **SMITH, Stuart**
**North Carolina, 28791 (US)**

• **JOLLY, Marc**
**D-09456 Annaberg-Buchholz (DE)**
• **HATTUM, Jos van**
**68580 Largitzen (FR)**
• **SØRENSEN, Bettina Balslev**
**8600 Silkeborg (DK)**
• **LANG, André**
**09465 Sehmatal-Cranzahl (DE)**

(74) Representative: **Szynka, Dirk et al**
**König-Szynka-Tilmann-von Renesse**
**Patentanwälte Partnerschaft mbB**
**Sollner Strasse 9**
**81479 München (DE)**

(56) References cited:
**US-A1- 2005 118 918    US-A1- 2008 057 807**
**US-A1- 2008 176 065**

**Description**

Field of the Invention

The present invention relates to an arc flash protection, multiple-use nonwoven fabric structure comprising one or more layers having fire resistant properties.

Background Art

An electrical arc flash is defined as a condition where electric current passes through ionized gases in the air. It is caused by an electrical fault and results in a dangerous release of intense energy into the space surrounding the electrical equipment.

This energy is released as a combination of:

- Extreme heat - temperatures can reach approximately 19,000 degrees Celsius (35,000 degrees Farenheit) in less than a second. This thermal release can ignite flammable clothing or textiles and cause 1st, 2nd, or 3rd degree burns to humans.

- Intense light can lead to temporary or permanent loss of vision for humans watching the arc flash.

- Acoustic and Pressure shock waves can rupture eardrums, collapse lungs, or result in severe impact injuries for humans.

- Debris - an arc flash can propel molten metal and debris at high velocities.

Flame retardant clothing is worn as part of the personal protective equipment (PPE) systems used to defend and protect workers who could be potentially exposed to arc flash situations. Many countries have established government standards which specify the level of performance required with respect to the clothing to be worn.

In the USA, the guidelines for arc flash safety in the workplace are specified in NFPA 70E - Standard for Electrical Safety in the Workplace. This standard specifies two methods to determine performance arc flash performance; ASTM F1506 - Standard Performance Specification for Flame Resistant Textile Materials for Wearing Apparel for Use by Electrical Workers Exposed to Momentary Electric Arc and Related Thermal Hazards, and ASTM F1959 - Standard Test Method for Determining the Arc Rating of Materials for Clothing.

Using ASTM F1959, the arc flash performance of the material is expressed as an Arc Thermal Performance Value (ATPV). Dependent on the ATPV, NFPA 70E defines four different categories of protection, or Hazard Rating Categories (HRC).

| ATPV [Cal/cm$^2$] | Hazard Rating Category |
|---|---|
| 4-8 | 1 |
| 8-25 | 2 |
| 25-40 | 3 |
| >40 | 4 |

In Europe, one of the primary methods used to determine arc performance is EN 61482-1-2 - Live Working - Protective Clothing Against the Thermal Hazards of an Electric Arc. This method uses two different test currents, 4kA and 7kA, to generate an arc. The current level is chosen according to the class of protection required for the practical usage conditions defined by the customer, tests performed using a 7kA current being more demanding. If the combination of time taken and maximum temperature rise fall below the allowed temperature rise to avoid 2$^{nd}$ degree burning as defined using STOLL curves, then the material is either rated as Class 1 using a 4kA test current, or Class 2 using a 7kA test current.

For protecting humans against arc flash occurrences, currently available fully durable, re-usable, or multi-launderable PPE apparel are typically made from traditional textiles such as woven and knitted materials. There are many different types of fully durable woven and knitted materials available in the market, however, they fall in to two distinct categories.

1. Fabrics manufactured using inherently flame retardant fibers. Within this category, materials are further differentiated by the type of fabric construction, weight, and types of fibers used.

2. Fabrics manufactured using non flame retardant fibers that are chemically treated after formation to provide flame retardancy. Materials within this category are differentiated by the fabric construction, weight, and chemical type(s) used to provide flame retardancy.

The major disadvantage of current woven materials is that the arc flash performance is heavily dependent on the weight of the material. As an example related to the US standards, typically, the lightest weight single layer woven materials available that meet the HRC 2 requirement are approximately 237 g/m$^2$, and even at this weight, the ATPV is only between approximately 8.4 and 8.7 Cal/cm$^2$ (minimum ATPV for HRC 2 is $\geq$ 8 Cal/cm$^2$). As an example related to the European standard EN 61482-1-2, current materials which meet the requirement of Class 2 have either a minimum basis weight of approximately 400 g/m$^2$, or use multiple layers of lighter weight materials to achieve the level of protection.
To obtain any improvement in ATPV, the weight of the material must be further increased. However, as the weight of the material is increased, other important performance attributes of the material such as its breathability and permeability and comfort are negatively impacted.

Summary of the Invention

An object of the present invention is to wholly or partly overcome the above disadvantages and drawbacks of the prior art. More specifically, it is an object to provide an arc flash protection, multiple-use nonwoven fabric structure which has improved arc flash performance at lower basis weights.
Additionally, it is an object of the present invention to provide an arc flash protection, multiple-use nonwoven fabric structure, which meets or exceeds all the additional requirements or performance standards for these applications, such as flame retardancy, strength, wash durability, etc.
The above objects, together with numerous other objects, advantages, and features which will become evident from the below description, are accomplished by a solution in accordance with the present invention, wherein the fabric structure has an arc flash facing nonwoven surface, and a nonwoven part of the fabric structure comprises non-inherent, and/or inherently fire resistant fibers, said fibers being mechanically, chemically or thermally bonded, whereby the fabric structure has a minimum Arc Thermal Protection Value (ATPV) to fabric basis weight ratio of 250 cal/g, preferably greater than 350 cal/g, more preferably greater than 500 cal/g, when measured in accordance with ASTM F1959 - Standard Test Method for Determining the Arc Rating of Materials for Clothing, and the fabric structure maintains said ATPV to fabric basis weight ratio through at least 25 washing cycles when washed according to AATCC Method 135 (3,IV, A iii).
Hereby an arc flash protection, multiple-use nonwoven fabric structure is obtained, which has a low basis weight and at the same time has an ATPV which exceeds the prior art woven fabrics. Furthermore, the fabric structure has an arc flash facing nonwoven surface. The unique effect of the invention is to change the mechanism by which the arc flash protective performance of a fabric is achieved. The arc flash performance of the invention is primarily determined by the engineered structure of the fabric, not the basis weight of the material, as is the case with prior art woven fabrics. As a result, equivalent or superior arc flash performance is achieved at fabric basis weights approximately 30% lighter than prior art woven materials. Due to the reduction in weight, the overall performance of the fabric is improved, most importantly in aspects of wearer comfort, such as air permeability, breathability, moisture vapour transmission, and reduced heat stress.
The term "maintains its ATPV to fabric basis weight ratio through at least 25 washing cycles" is in this context to be construed as when washed in accordance with AATCC Method 135 (3, IV, A iii), as measured according to ASTM F1959 - Standard Test Method for Determining the Arc Rating of Materials for Clothing.
According to the invention, fibers of the nonwoven part of the fabric structure are inherently fire resistant, such as, but not limited to, FR Viscose, meta-aramid, para-aramid, melamine, Polybenzimidazole (PBI), modacrylic fibers, or a combination thereof. The use of inherently flame resistant fibers negates the need for an additional chemical treatment to impart the required flame resistant performance to the fabric. Additionally, many of these fibers can impart other desirable performance attributes to the material that would not be achievable with standard textile fibers, for example, the inclusion of aramid fibers can further improve the strength, dimensional stability, and flame resistant performance of the fabric.
Additionally, fibers of the nonwoven part of the fabric structure are made of Nylon, Cotton, Viscose, Lyocell, Polyester, or a combination thereof. The use of standard textile fibers dictates that the fabric structure formed from these fiber types needs to be chemically treated to impart flame retardancy. As the types of FR chemicals used are predominantly substantive to Cellulosic based fibers, the use of Cotton, Viscose, and/or Lyocell fibers permits wash durable FR performance to be achieved. However, the FR chemical can negatively impact the strength and durability of the Cellulosic fibers, and it is therefore necessary to include synthetic fibers such as Nylon and/or Polyester in the blend to yield the desired strength and durability characteristics. As the inclusion of Nylon and/or Polyester fibers detracts from the FR performance, the blend level between these and the Cellulosic fibers is very important in obtaining optimum performance in both FR, and strength and durability characteristics. Advantageously, the structure of the invention allows the required level of FR performance to be achieved at higher levels of Nylon and/or Polyester fibers compared with current woven materials - up to 50% compared to a maximum of approximately 12% Nylon in conventional woven materials.

Also, the fibers may have a linear density between 0.5 and 5 dtex and a staple fiber length between 12.5 and 100 mm. With fibers in this linear density range, the number of fibers per unit area in the nonwoven part of fabric structure can be optimized to yield a more dense structure contributing to the improved ATPV performance exhibited. Likewise, the appearance and coverage of the nonwoven part of fabric structure are improved. Fibers with staple lengths between 12.5 and 100 mm allow optimum bonding to be achieved during mechanical bonding, positively impacting many fabric characteristics such as strength, wash durability, abrasion resistance, etc.

Advantageously, the mechanical bonding may be hydro-entanglement, air-entanglement, steam-entanglement, needle-punching, or the like bonding methods. Mechanical bonding by hydro-entanglement yields materials which are very clean with an appearance that can be modified to be similar to woven materials. It has a minimal effect on the hand of the bonded fabric, and the materials are therefore soft, drapable, and more comfortable to wear. Also, hydro-entanglement does not damage the fibers within the nonwoven and other layers during bonding, allowing improved strength, abrasion, and durability performance to be achieved.

The fibers of the nonwoven part of the fabric structure may also be chemically or thermally bonded. Chemical or thermal bonding of the nonwoven part of the fabric structure can allow additional functionality to be engineered into the material that can not be achieved by mechanical bonding alone. Multiple physical, chemical, and aesthetic attributes of the material can be enhanced, including for example liquid repellency, anti-static performance, and absorbency to name just a few.

In an embodiment according to the invention, the fabric structure may be chemically treated to impart flame resistant performance. By this method, standard textile fibers can be used to produce a fabric structure that yields an equivalent flame resistant performance to inherently FR fibers. Additionally, these fibers are substantially less expensive than the inherently FR types. Due to the type of FR chemical treatment used, the flame resistance imparted is permanent and wash durable for the life of the material. The treatment can also yield improvements in the overall durability of the fabric structure.

Additionally, the fabric structure may be chemically treated to enhance or impart wash durability and abrasion resistant performance. Treatments of this type further extend the multiple use characteristics of the fabric structure. The various embodiments of the invention have different levels of wash durability and abrasion resistance performance following mechanical bonding due to the different combinations of fiber types and layers - in some cases, the material may only withstand 15 washes or less. These treatments are employed to ensure that the fabric structure withstands a minimum of 25 washes or more. Additional chemistries can be included with this same treatment to impart or enhance other properties, such as softness, or absorbency. Also, further aftertreatment steps including sanforizing to reduce fabric shrinkage and improve softness; thermal calandering to control thickness, hand, and surface aesthetics; and a variety of coatings can be applied to either the inner or outer surfaces, or both, to provide performance such as heat sealability and repellency.

Advantageously, the fabric structure according to the invention may comprise one or more additional layers. The one or more additional layers may be a dry laid carded web, a nonwoven layer, a woven layer, a knitted layer, a net/mesh, a metalized layer, or a plastic film layer. Due to the ability to construct the fabric structure using layers constructed by different technologies, the arc flash protection of the fabric structure can be optimized for a given level of protection. For example, a different fabric structure may be required to meet the requirements of an EN 61482-1-2 Class 1 compared to a fabric structure meeting the requirements of Class 2. Additionally, as each of the different individual layers yield their own set of performance attributes, these can be combined into a single intimate fabric structure that delivers the combined benefits, not just in arc flash performance, but also many other desirable performance attributes.

Furthermore, the layers of the fabric structure may be mechanically bonded, such as by hydro-entanglement, air-entanglement, steam-entanglement, needle-punching, or the like bonding methods. The layers of the fabric structure may be chemically or thermally bonded, or glued or laminated, or the like bonding methods.

Also, the fabric structure may be dyed and/or printed. Depending on the aesthetic requirements of the end-use or customer, the fabric structure may be dyed, printed, or both, to the desired colors and/or patterns. By selecting the optimum dye type for the fibers in the fabric structure, the required degree of colorfastness, to both laundering and dry cleaning, can be established.

Advantageously, the fabric structure may have a basis weight of 40 to 1000 $g/m^2$. At higher arc protection levels, due to their dependence on basis weight, prior art woven materials typically use multiple, separate layers of material to provide the necessary protection. This results in a very heavy, bulky, uncomfortable, and wearer restrictive garment. The combination of improved arc protection at lower basis weights and the broad range of weight capabilities of the invention allows construction of a lighter weight, intimately bonded, single layer fabric structure that addresses all the hazard rating categories of NFPA 70E, and EN 61482-1-2 Class 1 and Class 2.

Furthermore, the fabric structure may have an ATPV of 2 to 50 cal/cm$^2$. Advantageously, and as mentioned above, the invention allows construction of a lighter weight, intimately bonded, single layer fabric structure that addresses all the hazard rating categories of NFPA 70E and EN 61482-1-2 Class 1 and Class 2.

The invention also relates to a garment made of an arc flash protection, multiple-use nonwoven fabric structure comprising the above-mentioned technical features.

According to the invention, the arc flash protection, multiple-use nonwoven fabric structure may be used for garments, blankets, flash fire PPE, molten metal splash PPE, fire fighters PPE, apparel, awnings, curtains, floor covers, work wear, military uses.

Brief Description of the Drawings

The invention and its many advantages will be described in more detail below with reference to the accompanying schematic drawings which for the purpose of illustration show some non-limiting embodiments and in which

Figs. 1-3 show cross-sectional views of different embodiments of the arc flash protection, multiple-use nonwoven fabric structure according to the invention.

Fig. 4 shows a chart including a comparison of the ATPV normalized for basis weight. All fabrics in the chart were tested using ASTM F1959 on a single layer of material.

All the figures are highly schematic and not necessarily to scale, and they show only parts which are necessary in order to elucidate the invention, other parts being omitted or merely suggested.

Detailed description of the invention

In the following, some different possible embodiments of the fabric structure according to the invention are explained to allow a greater understanding of the invention.

Initially, the types, blends, and dimensions of the fibers to be used to construct the at least one nonwoven layer of the fabric structure must be determined, the primary criteria for selection being the method used to impart flame retardancy to the fabric structure, which is a prerequisite for an arc flash protective fabric, and the reaction of the fibers to high temperatures - while a fiber may be flame retardant, it may still melt in the presence of heat and cause burns to the wearer of the material.

The two methods to impart flame retardancy are chemical treatment of the fabric structure or the use of inherently flame retardant fibers to construct the material. The reaction of the fiber to high temperatures is dependent on the type of polymer used to make the fiber.

With respect to selecting suitable fibers to be subjected to the chemical treatment method of imparting flame retardancy, the preferred fibers may comprise a blend of Cotton and/or Viscose and/or Lyocell, and Polyester and/or Nylon 6,6. The Cotton and/or Viscose and/or Lyocell fibers allow optimum adhesion of the FR chemistry and impart improved comfort performance to the final fabric. The Polyester and/or Nylon 6,6 fibers provide improved strength, abrasion, and softness to the final fabric. To obtain optimum performance, the level of Cotton and/or Viscose and/or Lyocell fiber should be at least 50% of the blend, the balance being Polyester and/or Nylon 6,6 fibers. Even though the Polyester and/or Nylon 6,6 fibers melt at temperatures of between 250°C and 260°C respectively, which are easily exceeded in an arc flash occurrence, at levels of 50% or less, this does not detract from the performance of the final fabric structure.

While not required to achieve the improved arc flash performance of the invention, it can be advantageous to other performance attributes to include a minor percentage, 30% or less, of a para-aramid, other high performance fiber to the blend in substitution of the Polyester and/or Nylon 6,6 fibers.

Embodiments of the invention constructed with inherently flame retardant fibers do not need a chemical aftertreatment to impart flame retardancy. Many types are available, including FR Viscose, meta-aramid, para-aramid, PBI (Polybenzimidazole), melamine, modacrylic fibers, or combinations thereof.

Irrespective of the fiber type, the preferred dimensions of the different fiber types are a linear density between 0.5 and 5 dtex and a staple fiber length between 12.5 and 100 mm.

After selecting the fibers, the fibers are thoroughly opened and blended using convention staple fiber preparation equipment to assure a uniform distribution and blend of the selected fiber types in such a form suitable for subsequent feeding to a web formation system.

Multiple types of web formation systems exist, however, the principle of the different systems is essentially the same - to prepare a uniform sheet of the fibers, or web, where the said fibers within the web are individualized, uniformly blended, and have a uniform weight and density throughout the web.

The main differences between the types of web formation systems are the way in which the individual fibers within the web are oriented. Parallel systems yield web structures where the fibers are essentially running predominantly in the same direction. Cross-laid systems take the a web produced on a parallel system and then fold it back on forth on itself to form a web in which the fibers are more equally oriented in both the length and width directions. Random web forming systems yield webs that orient the fiber not only in the length and width directions, but also vertically through the web.

The orientation of the fibers within the web significantly influences the strength properties of the final material. Parallel laid webs have significantly higher strengths in the length, or machine direction, compared to the width, or cross direction. Cross-laid webs have approximately equal strengths in the machine and cross machine directions, however, the basis weight uniformity of these types of webs, particularly at lighter weights (less than 100 $g/m^2$), is inferior to the other systems. Random webs, as used in the preferred embodiment, again yield approximately equal strengths in the machine and cross machine directions, have improved basis weight uniformity as well as improved appearance and coverage.

For apparel applications, it is desirable to have approximately equal strengths in both machine and cross machine directions, both for ease of subsequent processing and in the performance of the finished garment. Enhanced appearance and coverage provide for instance a more aesthetically pleasing garment.

Different embodiments of the invention are encompassed by being composed of two or more individual layers, said layers being assembled from any combination of dry laid carded webs, dissimilar nonwoven, knitted, woven, net/mesh, or film materials. All of the different layers that are to be incorporated into the fabric structure must be assembled together prior to forming an intimately bonded fabric structure.

Examples of the different layers that can be incorporated into the fabric structure are described below. In all embodiments of the invention, the outer arc flash facing layer of the fabric structure is a nonwoven.

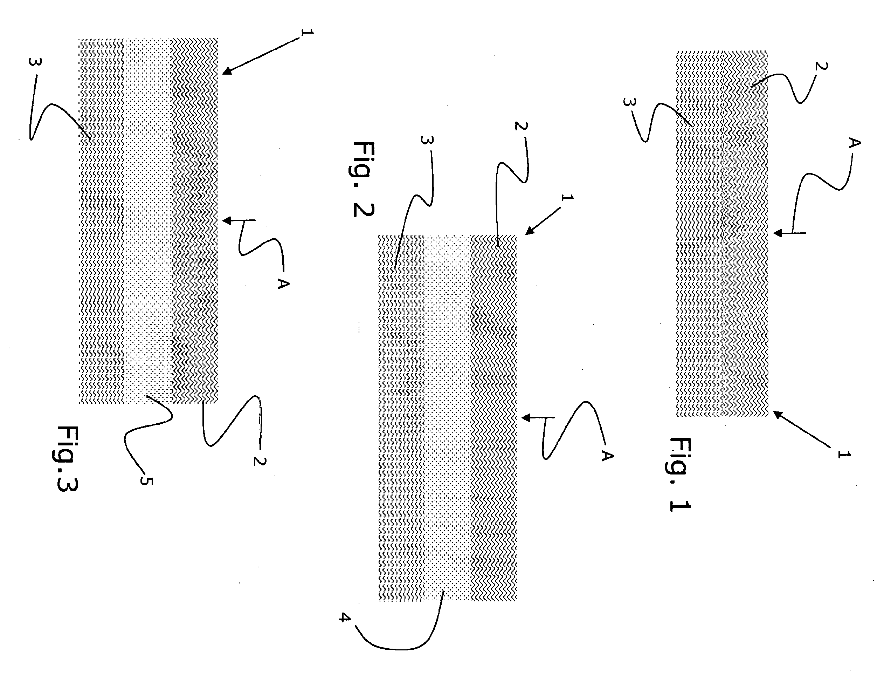

In Fig. 1, one embodiment of the fabric 1 according to the invention is shown in a cross-sectional view. In this embodiment, the fabric structure 1 is composed of a nonwoven dry laid carded web outer layer 2, and a nonwoven dry laid carded web inner layer 3. The nonwoven outer layer 2 and the nonwoven inner layer 3 may have an individual basis weight range of 15-200 $g/m^2$. The arrow A is indicating the arc flash challenge exerted onto the outer nonwoven layer 2 of the fabric structure 1.

In Fig. 2, another embodiment of the fabric structure 1 according to the invention is shown in a cross-sectional view. In this embodiment, the fabric structure 1 is composed of a nonwoven dry laid carded web outer layer 2, a knitted middle layer 4, and a nonwoven dry laid carded web inner layer 3. The knitted middle layer 4 is incorporated for providing additional dimensional stability and impart 'rip-stop' performance. Furthermore, the knitted layer 4 may be a loosely warp knitted scrim. The inclusion of this knitted layer 4 helps to prevent any small rip or tear in the material from propagating. The nonwoven outer layer 2 and the nonwoven inner layer 3 may in this embodiment have an individual basis weight range of 15-200 $g/m^2$. The knitted layer 4 may have a basis weight range of 20-100 $g/m^2$. Yet again, the arrow A is indicating the arc flash challenge exerted onto the outer nonwoven layer 2 of the fabric structure 1.

In Fig. 3, yet another embodiment of the fabric structure 1 according to the invention is shown in a cross-sectional view. In this embodiment, the fabric structure 1 is composed of a nonwoven dry laid carded web outer layer 2, a nonwoven dry laid carded web middle layer 5, and a nonwoven dry laid carded web inner layer 3. The nonwoven outer layer 2 and the nonwoven inner layer 3 may in this embodiment have an individual basis weight range of 15-200 $g/m^2$. The nonwoven middle layer 5 may have a basis weight range of 30-200 $g/m^2$. The arrow A is indicating the arc flash challenge exerted onto the outer nonwoven layer 2 of the fabric structure 1.

In other not shown embodiments, the fabric structure according to the invention may comprise a plurality of layers, such as a nonwoven dry laid carded web outer layer, a dissimilar nonwoven, woven, net/mesh, or film middle layer, and a dry laid carded web inner layer.

At this point in the process, the assembled layers have very little strength or integrity and must be bonded together to form a single intimate fabric structure. Multiple bonding methodologies are commonly known and fall into three different categories - chemical, mechanical, and thermal.

The preferred method is mechanical bonding of which there are two primary types; needlepunching and hydroentangling (or spunlacing). The basic principle of web bonding by needlepunching consists of many barbed needles reciprocating rapidly through the web. As the needles pass through the web, the barbs grab and then release tufts of fibers, reorienting and interlocking them in a predominantly vertical direction. The basic principle of the hydroentangling process consists of passing the web beneath a series of high pressure, small diameter water jets. As the water jets impinge on the fibers within the web, the individual fibers are moved and interlocked together. The needlepunching and hydroentangling bonding methods are used in combination to consolidate the layers into a single intimate fabric. In the case of hydroentanglement, the entangling step may be performed by using a pressure in the range of 20 MPa (200 bar) to 150 MPa (1500 bar). Tests have shown that the pressure level is related to the energy intake of the fabric, and furthermore that the strength of the fabric increases with pressure increase to a certain limit.

The properties of the final arc flash protective nonwoven fabric structure are significantly influenced by the interim performance of the material after bonding. In particular, the strength, wash durability, and abrasion resistance of the final material are primarily dependent on the performance after bonding.

Following bonding of the material, the materials are subjected to a variety of different aftertreatment steps to produce the final arc flash protective nonwoven fabric structure.

Initially, the materials are dyed and/or printed to the desired colors or patterns. These step(s) are performed using traditional textile finishing equipment. The types of dyes used are the same as those for dyeing traditional textiles, being determined by the fiber types used to construct the fabric structure, for example vat dyes for Cotton/Nylon blended fibers, disperse and vat dyes for Viscose/Polyester blended fibers, etc.

For those embodiments of the invention that are composed of non-FR fibers, the material may be treated with a durable chemical to impart flame retardancy. Several commonly known chemical types are available to achieve the required level of performance. In one preferred embodiment, a phosphonium sulfate based treatment is used, wherein the flame retardant molecule is polymerized predominantly within the cotton fibers of the fabric using an ammonia-cure process.

To further enhance the performance of the final arc protective nonwoven fabric structure with regards to attributes such as wash durability and abrasion resistance, the materials may be treated with cross-linking, film forming synthetic binders. The binders may be applied by pad, dip, or spray applications. In one preferred embodiment, an acrylic copolymer binder and melamine formaldehyde resin mixture are padded in to the material.

The final aftertreatment step is a combined process to soften the material, and reduce the shrinkage which can occur due to repeated launderings during the life of the fabric structure. A commonly known traditional method of achieving a softer and more shrink resistant material is via the process of sanforization, whereby, in the presence of water or steam, the material is stretched, shrunk, and fixed in the length and width directions.

As mentioned above, the performance of the fabric structures according to the invention were determined using the standards and requirements identified in ASTM F1959 - Standard Test Method for Determining the Arc Rating of Materials for Clothing, ASTM F 1506 - Standard Performance Specification for Flame Resistant Textile Materials for Wearing Apparel for Use by Electrical Workers Exposed to Momentary Electric Arc and Related Thermal Hazards, and EN 61482-1-2 - Live Working - Protective Clothing Against the Thermal Hazards of an Electric Arc.

The ATPV performance of the fabric structures according to the invention as determined by ASTM F1959 - Standard Test Method for Determining the Arc Rating of Materials for Clothing, easily exceeds the performance of currently available woven materials in the marketplace when comparing the materials on a weight for weight basis. The different embodiments of the invention have an ATPV to fabric basis weight ratio of at least 250 cal/g, preferably greater than 350 cal/g, more preferably greater than 500 cal/g. Currently available woven materials have an ATPV to fabric basis weight ratio ranging from approximately 270 - 370 cal/g.

To express this performance improvement in terms of just ATPV, and to illustrate the conversion;

$$\text{ATPV (cal/cm}^2) = \frac{\text{ATPV to Basis Weight Ratio (cal/g) x Fabric Basis Weight (g/m}^2)}{10{,}000}$$

Therefore, considering an embodiment of the invention having a basis weight of 200 g/m$^2$, the ATPV will be at least;

$$\text{ATPV (cal/cm}^2) = \frac{500 \times 200}{10{,}000}$$
$$= 10 \text{ cal/cm}^2$$

A comparison of the extrapolated ATPV of the invention at various basis weights compared to the extrapolated ATPV for currently available woven materials at the same weights is shown below in Table 1.

Table 1

| Basis Weight (g/m²) | Current Woven Materials ATPV : Basis Wt. Ratio 270 - 370 cal/g | Present Invention ATPV : Basis Wt. Ratio 500 cal/g |
|---|---|---|
| 150 | 4.0 - 5.5 | 7.5 |
| 175 | 4.7 - 6.5 | 8.7 |
| 200 | 5.4-7.4 | 10.0 |
| 225 | 6.1 - 8.3 | 11.2 |
| 250 | 6.7 - 9.2 | 12.5 |
| 275 | 7.4 - 10.2 | 13.7 |
| 300 | 8.1 - 11.1 | 15.0 |
| 325 | 8.8 - 12.0 | 16.2 |

Additionally, the embodiments of the invention maintain an ATPV to fabric basis weight ratio of at least 250 cal/g, preferably greater than 350 cal/g, more preferably greater than 500 cal/g through at least 25 washing cycles when washed in accordance with AATCC Method 135 (3, IV, A iii).

In addition to ATPV, to be approved for use as an arc flash protective material in the USA, the fabric structure must also meet all the requirements of ASTM F 1506 - Standard Performance Specification for Flame Resistant Textile Materials for Wearing Apparel for Use by Electrical Workers Exposed to Momentary Electric Arc and Related Thermal Hazards. When tested in accordance with this standard, the embodiments of the invention meet or exceed all requirements.

When tested in accordance with EN 61482-1-2 - Live Working - Protective Clothing Against the Thermal Hazards of an Electric Arc, the embodiments of the invention can meet a Class 1 performance level at a basis weight less than 200 g/m². A Class 2 performance level can be achieved at a basis weight less than 325 g/m² - currently available woven materials have basis weights of approximately 400 g/m² or higher to achieve this same performance.

While not a defined requirement for the fabric structure to be used in arc flash protection, the thermal mannequin performance of the material provides an additional important indication of how well a material performs in thermal or fire related end-uses. When tested in accordance with EN469 Protective Clothing for Fire Fighters, using a 4 sec flame time, many embodiments of the invention maintain a total burn of less than 60% through at least 25 washing cycles when washed in accordance with AATCC Method 135 (3, IV, A iii).

Examples

In the following two examples of the arc flash protection, multiple-use nonwoven fabric structure according to the invention will be further described.

Example 1

In this embodiment, the fabric structure consists of three layers.

Layer 1, the outer layer of the nonwoven composite, is the arc facing surface of the fabric structure and is composed from Cotton and Nylon 6,6 fibers, the Cotton fibers having an average staple length of approximately 27 mm and a micronaire value of approximately 4.7, and the Nylon 6,6 fibers having an average staple length of approximately 38 mm and a linear density of 1.9 dtex.

The said fibers were thoroughly opened and blended in a ratio of 60% Cotton and 40% Nylon 6,6 using convention staple fiber preparation equipment to assure a uniform distribution and blend of the two fiber types in a form suitable for subsequent feeding to the web formation system. The pre-opened and blended fibers were fed into the web formation system, in this case a random system.

In this example, the basis weight of the web formed was 55 g/m².

To provide additional dimensional stability and performance, layer 2, a loosely warp knitted scrim was introduced into the structure. A warp knitted scrim was specifically chosen to impart 'rip-stop' performance to the final material. Without such a layer, any small rip or tear in the final fabric structure would have the potential to continue to propagate and grow larger. Due to the warp knitted structure used, the potential for any tear to propagate is significantly diminished.

The structure of the warp knit used was an open mesh to allow adequate bonding during subsequent processing, was composed of 100% Polyester yarns, and had a basis weight of approximately 27 g/m².

Layer 3 was identical in construction to layer 1 in this embodiment.

At this point in the process, the three layers have a very little strength or integrity and must be bonded together prior to subsequent processing. The three layers were mechanical bonded by using hydroentanglement.

Following web bonding, the fabric structure was subjected to multiple aftertreatment steps to produce the final fabric structure.

The material was dyed and printed on a traditional textile equipment using vat dyes. The material was then treated with a flame retardant chemical. In order to achieve a permanently flame retardant material, a phosphonium sulfate based treatment was used wherein the flame retardant molecule is polymerized predominantly within the cotton fibers of the fabric structure using an ammonia-cure process. The flame retardant chemical was applied at 20-40% by dry weight of the fabric structure.

Subsequent to the flame retardant treatment, the fabric structure was treated with a mixture of an acrylic copolymer binder and melamine formaldehyde resin. The total addition level to the material is between 5 and 15% by dry weight of the fabric structure. This treatment further enhances the abrasion resistance and wash durability of the material.

The final step of the process is mechanical softening of the material to provide the desirable level of hand and drape expected for apparel materials.

The combination of base nonwoven composite and after-treatments resulted in a fabric structure with a finished basis weight of 197 g/m$^2$.

The fabric structure was tested to all parameters defined in ASTM F 1506 - Standard Performance Specification for Flame Resistant Textile Materials for Wearing Apparel for Use by Electrical Workers Exposed to Momentary Electric Arc and Related Thermal Hazards.

Actual results are shown in the following Table 2 in comparison to the requirements of the standard.

It is important to note that different minimum performance requirements are defined in the standard depending on the type of material. Currently, only minimum performance requirements for woven and knitted fabrics are defined in the standard.

Additionally, dependent upon the weight of the material, the minimum performance requirements defined in ASTM F1506 are different - the values in the table below are those defined for woven fabrics between 102 and 200 g/m$^2$ and knitted fabrics between 102 and 271 g/m$^2$.

As can be seen from the results, the fabric according to Example 1, having a basis weight of 197 g/m$^2$, meets or exceeds all criteria of the standard for knitted as well as for woven fabrics in this weight range.

Table 2

| Characteristic | Test method | ASTM F1506 Minimum performance requirements | | Example 1 according to present invention |
|---|---|---|---|---|
| | | Woven material | Knitted material | |
| Tensile at Break (N) | ASTM D5034 | 134 min. | N/A | 510 |
| Tear Resistance (N) | ASTM D1424 | 11 min. | N/A | 442 |
| Burst Strength (N) | ASTM D3786 | N/A | 179 | Not Tested |
| Seam Slippage | ASTM D434 | 6 mm max. at 134 N | N/A | N/A |
| *Colorfastness* | | | | |
| Laundering (Class) | AATCC 61 IIA | Class 3 min. | Class 3 min. | Class 4.5 |
| Dry Cleaning (Class) | AATCC 132 | Class 3 min. | Class 3 min. | Class 4.5 |
| *Dimensional Change* | | | | |
| Dry Clean Shrinkage (%) | AATCC 158 | 3 max. | N/A | 1.2 |
| Laundry Shrinkage (%) | AATCC 135 | 3 max. | N/A | 2.3 |

(continued)

| Initial Flammability | | | | |
|---|---|---|---|---|
| Char Length (mm) | ASTM D6413 | 152 max. | 152 max. | 112 |
| Afterflame (s) | ASTM D6413 | 2 max. | 2 max. | 0 |
| Melting Drip (s) | ASTM D6413 | 0 max. | 0 max. | 0 |
| Flammability After 25 Washes (washed in accordance with AATCC 135) | | | | |
| Char Length (mm) | ASTM D6413 | 152 max. | 152 max. | 120 |
| Afterflame (s) | ASTM D6413 | 2 max. | 2 max. | 0 |
| Melting Drip (s) | ASTM D6413 | 0 max. | 0 max. | 0 |
| Arc Flash Test | | | | |
| Afterflame time (s) | ASTM F1959 | 5 max. | 5 max. | 2.5 |
| Arc Rating (cal/cm$^2$) | ASTM F1959 | 4 - 8 (Hazard Risk Category 1) 8 - 25 (Hazard Risk Category 2) 25 - 40 (Hazard Risk Category 3) 40 + (Hazard Risk Category 4) | | 11.1 (HRC 2) |

Example 2

Again, in this embodiment, the fabric structure consists of three layers.

Layer 1, the outer layer of the nonwoven composite, is the arc facing surface of the fabric structure and is composed from Cotton, Nylon 6,6, and para-aramid fibers, the Cotton fibers having an average staple length of approximately 27 mm and a micronaire value of approximately 4.7, the Nylon 6,6 fibers having an average staple length of approximately 38 mm and a linear density of 1.9 dtex, and the para-aramid fibers having a staple length of approximately 63 mm and a linear density of 2.5 dtex.

The said fibers were thoroughly opened and blended in a ratio of 60% Cotton, 20% Nylon 6,6, and 20% para-aramid using convention staple fiber preparation equipment to assure a uniform distribution and blend of the two fiber types in a form suitable for subsequent feeding to the web formation system. The pre-opened and blended fibers were fed into the web formation system, in this case a random system.

In this example, the basis weight of the web formed was 55 g/m$^2$.

Layer 2, to provide additional dimensional stability and performance, a loosely warp knitted scrim was introduced into the structure. A warp knitted scrim was specifically chosen to impart 'rip-stop' performance to the final material. Without such a layer, any small rip or tear in the final fabric structure would have the potential to continue to propagate and grow larger. Due to the warp knitted structure used, the potential for any tear to propagate is significantly diminished.

The structure of the warp knit used was an open mesh to allow adequate bonding during subsequent processing, was composed of 100% Polyester yarns, and had a basis weight of approximately 27 g/m$^2$.

Layer 3 was identical in construction to layer 1 in this embodiment.

At this point in the process, the three layers have a very little strength or integrity and must be bonded together prior to subsequent processing. The three layers were mechanical bonded by using hydroentanglement.

Following web bonding, the fabric structure was subjected to multiple aftertreatment steps to produce the final fabric structure.

The material was dyed and printed on a traditional textile equipment using vat dyes. The material was then treated with a flame retardant chemical. In order to achieve a permanently flame retardant material, a phosphonium sulfate based treatment was used, wherein the flame retardant molecule was polymerized predominantly within the cotton fibers of the fabric structure, using an ammonia-cure process. The flame retardant chemical was applied at 20-40% by dry weight of the fabric structure.

Subsequent to the flame retardant treatment, the fabric was treated with a mixture of an acrylic copolymer binder and melamine formaldehyde resin. The total addition level to the material was between 5 and 15% by dry weight of the fabric structure. This treatment further enhances the abrasion resistance and wash durability of the material.

The final step of the process was mechanical softening of the material to provide the desirable level of hand and drape expected for apparel materials.

The combination of base nonwoven composite and after-treatments resulted in a fabric structure with a finished basis weight of 203 g/m$^2$.

The fabric structure was tested in accordance with ASTM F1959 - Standard Test Method for Determining the Arc Rating of Materials for Clothing. Example 2 material achieved an ATPV equal to 13.3 cal/cm$^2$.

Furthermore, the arc flash performance of fabric structures according to Example 1 and Example 2 was compared to currently available woven materials in the marketplace.

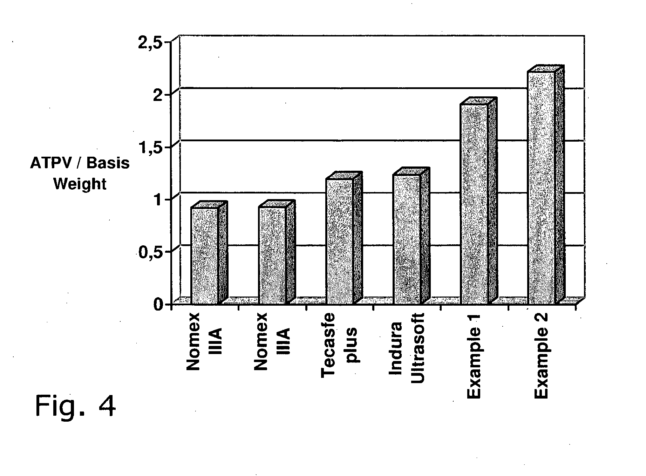

To more easily compare the different materials and weights, Table 3 and Fig. 4 below include a comparison of the ATPV normalized for basis weight. All fabrics were tested using ASTM F1959 on a single layer of material.

Table 3

| Material | Basis Weight | ATPV | ATPV / Basis Weight |
|---|---|---|---|
| Nomex® IIIA | 9.5 oz/yd$^2$ / 322 g/m$^2$ | 8.7 cal/cm$^2$ | 270 cal/g |
| Nomex® IIIA | 6.0 oz/yd$^2$ / 203 g/m$^2$ | 5.6 cal/cm$^2$ | 275 cal/g |
| Tecasafe™ plus | 7.0 oz/yd$^2$ / 237 g/m$^2$ | 8.4 cal/cm$^2$ | 354 cal/g |
| Indura® Ultrasoft™ | 7.0 oz/yd$^2$ / 237 g/m$^2$ | 8.7 cal/cm$^2$ | 367 cal/g |
| Example 1 | 5.8 oz/yd$^2$ / 197 g/m$^2$ | 11.1 cal/cm$^2$ | 564 cal/g |
| Example 2 | 6.0 oz/yd$^2$ / 203 g/m$^2$ | 13.3 cal/cm$^2$ | 654 cal/g |

From the above Table 3 as well as Fig. 4, it is easily deduced that the fabric structure according to Example 1 as well as Example 2 outperform the currently available woven materials in the marketplace in terms of arc flash performance at significantly lower basis weights.

The fabric structure according to Example 1 outperforms the Nomex IIIA materials by approximately 200% and the Tecasafe plus and Indura Ultrasoft by approximately 150%. Furthermore, the fabric structure according to Example 2 outperforms the Nomex IIIA materials by approximately 230% and the Tecasafe plus and Indura Ultrasoft by approximately 180%.

## Claims

**1.** A method for manufacturing a multiple-use nonwoven fabric structure having an Arc Thermal Protection Value (ATPV) to fabric basis weight ratio greater than 250 cal/g, when measured in accordance with ASTM F1959-Standard Test Method for Determining the Arc Rating of Materials for Clothing, and being a Hazard Risk Category 2 in accordance with NFPA 70E Standard for Electrical Safety in the Workplace,
the method comprising the steps of:

- assembling two or more individual layers comprising a web of inherently fire resistant fibers and being assembled from any combination of dry laid carded webs, dissimilar nonwoven, knitted, woven, net/mesh, or film materials,
- bonding the layers together by a combination of needle-punching and spunlacing to form a single intimate fabric.

**2.** A method according to claim 1, wherein the web is folded back and forth upon itself to form a web in which the fire resistant fibers are more equally oriented in both a length direction and a width direction of the web, yielding approximately equal strengths in both directions.

**3.** A method according to claim 1 or 2, wherein the needle-punching is performed by penetrating the web with an array of barbed needles that carry tufts of the web's own fire-resistant fibers in a vertical direction through the web.

**4.** A method according to any of the preceding claims, wherein the spunlacing is performed by using a pressure in the

**EP 2 481 841 B1**

range of 20 MPa (200 bar) to 150 MPa (1500 bar).

5. A method according to any of the preceding claims, wherein the fabric structure is dyed and/or printed.

6. A multiple-use nonwoven fabric structure having an Arc Thermal Protection Value (ATPV) to fabric basis weight ratio greater than 250 cal/g, when measured in accordance with ASTM F1959-Standard Test Method for Determining the Arc Rating of Materials for Clothing, and being a Hazard Risk Category 2 in accordance with NFPA 70E Standard for Electrical Safety in the Workplace, said multiple-use nonwoven fabric structure comprising two or more individual layers comprising a web of inherently fire resistant fibers and any of a dry-laid carded web, a nonwoven layer, a woven layer, a knitted layer, a net/mesh, or a combination thereof and being bonded by a combination of needle-punching and spunlacing.

7. A multiple-use nonwoven fabric structure according to claim 6, wherein the inherent fibers are, but not limited to, FR Viscose, meta-aramid, para-aramid, melamine, Polybenzimidazole (PBI), modacrylic fibers, or a combination thereof.

8. A multiple-use nonwoven fabric structure according to claim 6 or 7, wherein the fibers have a linear density between 0.5 and 5 dtex and a staple fiber length between 12.5 and 100 mm.

9. A multiple-use nonwoven fabric structure according to any of the claims 6 to 8, wherein the fabric structure has been dyed and/or printed.

10. A multiple-use nonwoven fabric structure according to any of the claims 6 to 9, wherein the nonwoven layer has an individual basis weight range of 15-200 g/m2.

11. Garment made of a multiple-use nonwoven fabric structure having an Arc Thermal Protection Value (ATPV) to fabric basis weight ratio greater than 250 cal/g, when measured in accordance with ASTM F1959-Standard Test Method for Determining the Arc Rating of Materials for Clothing, and being a Hazard Risk Category 2 in accordance with NFPA 70E Standard for Electrical Safety in the Workplace'as claimed in any of claims 6 to 10.

12. Use of an arc flash protection, multiple-use nonwoven fabric structure having an Arc Thermal Protection Value (ATPV) to fabric basis weight ratio greater than 250 cal/g, when measured in accordance with ASTM F1959-Standard Test Method for Determining the Arc Rating of Materials for Clothing, and being a Hazard Risk Category 2 in accordance with NFPA 70E Standard for Electrical Safety in the Workplace'as claimed in any of claims 6 - 10 for garments, blankets, flash fire PPE, molten metal splash PPE, fire fighters PPE, apparel, awnings, curtains, floor covers, work wear, military uses.

**Patentansprüche**

1. Verfahren zum Herstellen einer Vliesstoffstruktur zum vielfältigen Einsatz, bei welcher das Verhältnis von Lichtbogen-Wärmeschutzfaktor (*Arc Thermal Protection Value,* ATPV) zu Flächengewicht des Stoffs mindestens 250 cal/g beträgt, gemessen nach dem ASTM F1959-Standardtestverfahren zur Bewertung der Lichtbogenschutzeigenschaften von Materialien für Kleidung, und welche der Gefahrenklasse 2 ist nach dem NFPA 70E Standard für Elektrische Sicherheit am Arbeitsplatz,
welches Verfahren die Schritte umfasst:

   - Zusammenbringen von zwei oder mehreren Einzellagen, darunter ein Flor aus inhärent flammhemmenden Fasern, wobei die Einzellagen eine beliebige Kombination aus trockengelegten kardierten Floren, anderen Vlieslagen, gestrickten Lagen, gewebten Lagen, Netz/Maschenwerk und Schichtmaterialien sein können;
   - Verbinden der Lagen miteinander durch eine Kombination aus Nadelverfestigung und Wasserstrahlverfestigung, um daraus einen einzigen verbundenen Stoff zu bilden.

2. Verfahren nach Anspruch 1, bei welchem das Flor zurück und vorwärts gefaltet und auf sich selbst gelegt wird, um ein Flor zu bilden, in dem die flammhemmenden Fasern sowohl in der Längen- als auch in der Breitenrichtung des Flors gleichmäßiger verteilt sind, sodass in etwa dieselbe Festigkeit in beiden Richtungen resultiert.

3. Verfahren nach Anspruch 1 oder 2, bei welchem die Nadelverfestigung mit nebeneinander angeordneten, mit Widerhaken versehenen Nadeln erfolgt, welche das Flor durchsetzen und die flammhemmenden Fasern des Flors büschelweise durch das Flor bewegen.

4. Verfahren nach einem der vorstehenden Ansprüche, bei welchem die Wasserstrahlverfestigung bei einem Druck in einem Bereich zwischen 20 MPa (200 bar) und 150 MPa (1500 bar) erfolgt.

5. Verfahren nach einem der vorstehenden Ansprüche, bei welchem die Stoffstruktur gefärbt und/oder bedruckt wird.

6. Vliesstoffstruktur zum vielfältigen Einsatz, bei welcher das Verhältnis von Lichtbogen-Wärmeschutzfaktor (*Arc Thermal Protection Value,* ATPV) zu Flächengewicht des Stoffs mindestens 250 cal/g beträgt, gemessen nach dem ASTM F1959-Standardtestverfahren zur Bewertung der Lichtbogenschutzeigenschaften von Materialien für Kleidung, und welche der Gefahrenklasse 2 ist nach dem NFPA 70E Standard für Elektrische Sicherheit am Arbeitsplatz, welche Vliesstoffstruktur zum vielfältigen Einsatz zwei oder mehrere Einzellagen aufweist, darunter ein Flor aus inhärent flammhemmenden Fasern und eines von einem trockengelegten kardierten Flor, einer Vlieslage, einer gestrickten Lage, einer gewebten Lage, einem Netz/Maschenwerk, einem Schichtmaterial oder eine beliebigen Kombination daraus, wobei die Einzellagen durch eine Kombination aus Nadelverfestigung und Wasserstrahlverfestigung verbunden sind.

7. Vliesstoffstruktur zum vielfältigen Einsatz nach Anspruch 6, bei welcher die inhärenten Fasern beispielsweise FR Viskose-, Meta-Aramid-, Para-Aramid-, Melamin-, Polybenzimidazol (PBI)-, Modacryl-Fasern oder eine Mischung daraus sind.

8. Vliesstoffstruktur zum vielfältigen Einsatz nach Anspruch 6 oder 7, bei welcher die Feinheit der Fasern zwischen 0,5 und 5 dtex und die Faserlänge zwischen 12,5 und 100 mm liegt.

9. Vliesstoffstruktur zum vielfältigen Einsatz nach einem der Ansprüche 6 bis 8, welche Stoffstruktur gefärbt und/oder bedruckt worden ist.

10. Viiesstoffstruktur zum vielfältigen Einsatz nach einem der Ansprüche 6 bis 9, bei welcher die Vlieslage ein Flächengewicht von 15 bis 200 g/m2 haben.

11. Kleidungsstück aus einer Viiesstoffstruktur zum vielfältigen Einsatz, bei welcher das Verhältnis von Lichtbogen-Wärmeschutzfaktor (*Arc Thermal Protection Value*, ATPV) zu Flächengewicht des Stoffs mindestens 250 cal/g beträgt, gemessen nach dem ASTM F1959-Standardtestverfahren zur Bewertung der Lichtbogenschutzeigenschaften von Materialien für Kleidung, und welche der Gefahrenklasse 2 ist nach dem NFPA 70E Standard für Elektrische Sicherheit am Arbeitsplatz, nach einem der Ansprüche 6 bis 10.

12. Verwendung einer Vliesstoffstruktur zum vielfältigen Einsatz, bei welcher das Verhältnis von Lichtbogen-Wärmeschutzfaktor (*Arc Thermal Protection Value*, ATPV) zu Flächengewicht des Stoffs mindestens 250 cal/g beträgt, gemessen nach dem ASTM F1959-Standardtestverfahren zur Bewertung der Lichtbogenschutzeigenschaften von Materialien für Kleidung, und welche der Gefahrenklasse 2 ist nach dem NFPA 70E Standard für Elektrische Sicherheit am Arbeitsplatz, nach einem der Ansprüche 6 bis 10 für Kleidungsstücke, Decken, Lichtbogen-Schutzkleidung, Schutzkleidung gegen Spritzer geschmolzenen Metalls, Feuerwehr-Schutzkleidung, Bekleidung, Planen, Vorhänge, Fußbodenbeläge, Arbeitskleidung, Militäranwendungen.

**Revendications**

1. Procédé de fabrication d'une structure en tissu non tissé à usages multiples présentant un rapport entre la valeur de protection thermique aux arcs (*Arc Thermal Protection Value*, ATPV) et la masse au mètre carré du tissu d'au moins 250 cal/g, mesuré conformément à ASTM F1959 - Méthode d'essai normalisée pour la détermination de la classe de protection contre l'arc des matériaux destinés aux vêtements, et appartenant à la catégorie de danger/risque 2 conformément à la norme NFPA 70E sur la sécurité électrique sur le lieu de travail, le procédé comprenant les étapes consistant à :

- assembler au moins deux couches distinctes comprenant un voile de fibres ignifuges de façon inhérente et étant assemblées à partir de toute combinaison entre des voiles cardés par voie sèche, des matières non tissées dissimilaires, tricotées, tissées, une résille/un treillis ou un film,

- lier les couches entre elles par une combinaison d'aiguilletage et de la jet d'eau consolidation pour former un tissu intimement uni.

2. Procédé selon la revendication 1, dans lequel le voile est plié en va-et-vient sur lui-même pour former un voile dans lequel les fibres ignifuges sont orientées avec une plus grande égalité aussi bien dans le sens de la longueur que dans le sens de la largeur du voile, en produisant des résistances approximativement égales dans ces deux sens.

3. Procédé selon la revendication 1 ou 2, dans lequel l'aiguilletage s'effectue par pénétration du voile par un ensemble d'aiguilles à barbes qui portent des touffes de fibres ignifuges du voile même, dans un sens vertical à travers le voile.

4. Procédé selon l'une quelconque des revendications précédentes, dans lequel la jet d'eau consolidation s'effectuee en utilisant une pression située dans la plage allant de 20 MPa (200 bar) à 150 MPa (1500 bar).

5. Procédé selon l'une quelconque des revendications précédentes, dans lequel la structure en tissu est teinte et/ou imprimée.

6. Structure en tissu non tissé à usages multiples présentant un rapport entre la valeur de protection thermique aux arcs (*Arc Thermal Protection Value*, ATPV) et la masse au mètre carré du tissu d'au moins 250 cal/g, mesuré conformément à ASTM F1959 - Méthode d'essai normalisée pour la détermination de la classe de protection contre l'arc des matériaux destinés aux vêtements, et appartenant à la catégorie de danger/risque 2 conformément à la norme NFPA 70E sur la sécurité électrique sur le lieu de travail, ladite structure en tissu non tissé à usages multiples comprenant au moins deux couches distinctes comprenant un voile de fibres ignifuges de façon inhérente et tout élément parmi un voile cardé par voie sèche, une couche non tissée, une couche tissée, une résille/un treillis, ou une combinaison de ceux-ci et étant liées par une combinaison d'aiguilletage et de la jet d'eau consolidation.

7. Structure en tissu non tissé à usages multiples selon la revendication 6, dans laquelle les fibres inhérentes sont, de manière non exhaustive, la viscose ignifugée, le méta-aramide, le para-aramide, la mélamine, le polybenzimidazole (PBI), les fibres modacryliques ou une combinaison de ces matières.

8. Structure en tissu non tissé à usages multiples selon la revendication 6 ou 7, dans laquelle les fibres ont une masse linéique comprise entre 0,5 et 5 dtex, et une longueur de fibres discontinues comprise entre 12,5 et 100 mm.

9. Structure en tissu non tissé à usages multiples selon l'une quelconque des revendications 6 à 8, dans laquelle la structure en tissu est teinte et/ou imprimée.

10. Structure en tissu non tissé à usages multiples selon l'une quelconque des revendications 6 à 9, dans laquelle la couche non tissée a une masse au mètre carré allant de 15 à 200 g/m$^2$.

11. Vêtement composé d'une structure en tissu non tissé à usages multiples présentant un rapport entre la valeur de protection thermique aux arcs (*Arc Thermal Protection Value*, ATPV) et la masse au mètre carré du tissu d'au moins 250 cal/g, mesuré conformément à ASTM F1959 - Méthode d'essai normalisée pour la détermination de la classe de protection contre l'arc des matériaux destinés aux vêtements, et appartenant à la catégorie de danger/risque 2 conformément à la norme NFPA 70E sur la sécurité électrique sur le lieu de travail selon l'une quelconque des revendications 6 à 10.

12. Utilisation d'une structure en tissu non tissé à usages multiples offrant une protection contre le flash d'arc, présentant un rapport entre la valeur de protection thermique aux arcs (*Arc Thermal Protection Value*, ATPV) et la masse au mètre carré du tissu d'au moins 250 cal/g, mesuré conformément à ASTM F1959 - Méthode d'essai normalisée pour la détermination de la classe de protection contre l'arc des matériaux destinés aux vêtements, et appartenant à la catégorie de danger/risque 2 conformément à la norme NFPA 70E sur la sécurité électrique sur le lieu de travail selon l'une quelconque des revendications 6 à 10, pour les vêtements, les couvertures, les EPI contre la déflagration, les EPI contre les projections de métal en fusion, les EPI destinés aux pompiers, l'habillement, les bâches, les rideaux, les revêtements de sol, les vêtements professionnels et les usages militaires.

A

2

1

Fig. 1

3

1

A

2

3

Fig. 2

4

1

A

2

5

3

Fig.3

Fig. 4